# EUROPEAN PATENT SPECIFICATION

(11) **EP 1 325 801 B1**
(45) Date of publication and mention of the grant of the patent: **17.08.2005**
(21) Application number: 03250085.2
(22) Date of filing: 08.01.2003
(51) Int. Cl.: B29C 31/04, B29C 39/24, B29C 39/42

(54) **Apparatus for making moulded plastics articles**
Vorrichtung zur Herstellung von geformten Gegenständen aus Kunststoff
Appareil pour fabriquer des articles moulés en plastique

(30) Priority: 08.01.2002 GB 0200313
(43) Date of publication of application: 09.07.2003
(73) Proprietor: MCP Tooling Technologies Limited, Stone Staffordshire ST15 8LQ (GB)
(72) Inventor: Flegel, Wolfgang, 41236 Mönchengladbach (DE); Frohn, Heiner-Helmut, 41462 Neuss (DE); Simmonds, Ronald, 41352 Korschenbroich (DE); Schoeneborn, Henner, 51709 Marienheide-Kotthausen (DE)
(74) Representative: Symons, Rupert Jonathan

(56) References cited:
- EP-A- 1 166 989
- WO-A-87/01328
- WO-A-87/06878
- US-A- 3 752 623
- US-A- 3 773 300
- US-A- 3 793 255
- US-A- 4 279 360
- US-A- 5 100 699
- US-A- 5 275 545
- US-A- 5 529 212

## Description

This invention relates to the moulding of plastics material articles, more particularly but not exclusively in the context of making one off or small quantities of articles, such as prototypes for testing designs later to be mass produced. Some plastics materials, particularly some polymers including polyamide, e.g. nylon, are not easily moulded with fine detail, except with complex and expensive control equipment. This may be inappropriate for the kind of prototype manufacturing apparatus mentioned. Accordingly, an object of the invention is to provide apparatus for moulding which can produce a good result in the context but which is relatively inexpensive.

US-A-5 529 212 and US-A-3 773 300 disclose apparatuses for moulding of plastics material articles according to the preamble of claim 1.

EP-A-1 166 989 discloses a device having two pressurized chambers for vacuum casting plastic parts.

According to the invention there is provided apparatus for making a moulded thermoplastics material article, the apparatus comprising a plurality of reservoirs for receiving respective polymer thermoplastics intermediate components, heating means for melting said components in said reservoirs and maintaining them heated; mixing means for mixing the molten contents of the respective reservoirs; piston and cylinder means for transferring the reservoir contents out of the reservoirs, support means for supporting a rigid or soft rubber moulding; and dispensing means for dispensing said plastics material into a rigid or soft rubber mould supported by said support means; characterised in that said apparatus comprises:
a first compartment containing said reservoirs, said heating means, said mixing means and pump means;
a second compartment sealed from said first compartment and containing said support means and said dispensing means; and
a vacuum pump and control means for maintaining the ambient pressure in the second compartment less than the ambient pressure in the first-compartment;
said piston and cylinder means comprising, for each reservoir, a cylinder connected to the respective reservoir via a first valve and to said dispensing means via a second valve, and a piston connected to common drive means for said pump means to supply respective controlled synchronised amounts of the contents of the reservoirs.

Preferably, the vacuum pump and control means are operable for maintaining the ambient pressure in each of the two compartments less than atmospheric pressure.

Preferably, the mould is a silicon or polyurethane rubber mould.

Preferably, said dispensing means comprises mixing means, for example a static mixing tube, operable for mixing said plastics material before dispensing it to said mould.

Advantageously, the apparatus comprises apparatus wherein said reservoirs and said cylinders are formed in respective metal blocks, said heating means being coupled to said blocks for heating the blocks.

For a better understanding of the invention and to show how the same may be carried into effect, reference will now be made, by way of example, to the accompanying drawings, in which:-
Figure 1 is a front view of equipment for casting prototype items in engineering plastics materials;
Figure 2 is a diagram for explaining the construction and operation of a mechanism forming part of the Figure 1 equipment and operable for mixing and dispensing plastics material intermediates;
Figures 3 and 4 are respective sectional views of part of the Figure 2 mechanism on lines III-III and IV-IV of Figure 5;
Figure 5 is a plan view of part of the Figure 2 mechanism; and
Figure 6 is a diagram of parts of the Figure 1 apparatus.

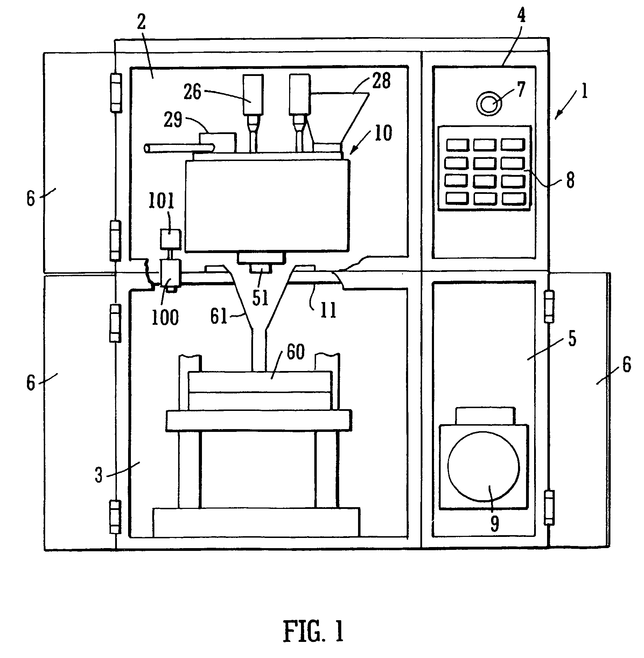

The Figure 1 equipment comprises a cabinet 1 divided into four compartments 2, 3, 4 and 5. The compartments 2 and 4 lie above respective ones of the compartments 3 and 5. The compartments 2, 3 and 4 have doors 6 (shown open) while compartment 5, which contains electro-mechanical control items and electronic control and computing apparatus (not shown), has a front panel supporting an emergency cut-off button 7 and a touch screen control panel 8.

The compartment 5 contains electrical machinery including a vacuum pump 9 while the compartment 2 contains a mechanism 10 for mixing and dispensing plastics material intermediates. The compartments 2 and 3 are divided one from another by a sturdy floor plate 11 strong enough for the two compartments to remain sealed one from the other despite a substantial difference in vacuum within the two. The plate 11 could be made of aluminium or other suitable material. A valve 100 with a motor drive 101 is mounted in the plate 11 to permit the pressure in compartments 2 and 3 to be equalised or maintained equal when required.

The intermediates comprise thermoplastic materials with or without fillers. The intermediates are chosen to give the desired mechanical properties of the material of the cast component, i.e. the hardness or Durometer reading and related properties such as tensile modulus, resilience, plasticity, compression resistance and elasticity. For example, the intermediates might comprise commercially available materials such as Caprolactum along with the appropriate activators and catalysts. These components are intended to produce a polyamide plastics material with particular, mechanical properties, namely a relatively rigid material. The activator and catalyst might be replaced by an alternative catalyst and activator in specific proportions to give different properties, for example a relatively tougher plastics material. Also, fibrous material or filler, e.g. glass fibre, may be added to give a fibre reinforced plastics material cast component.

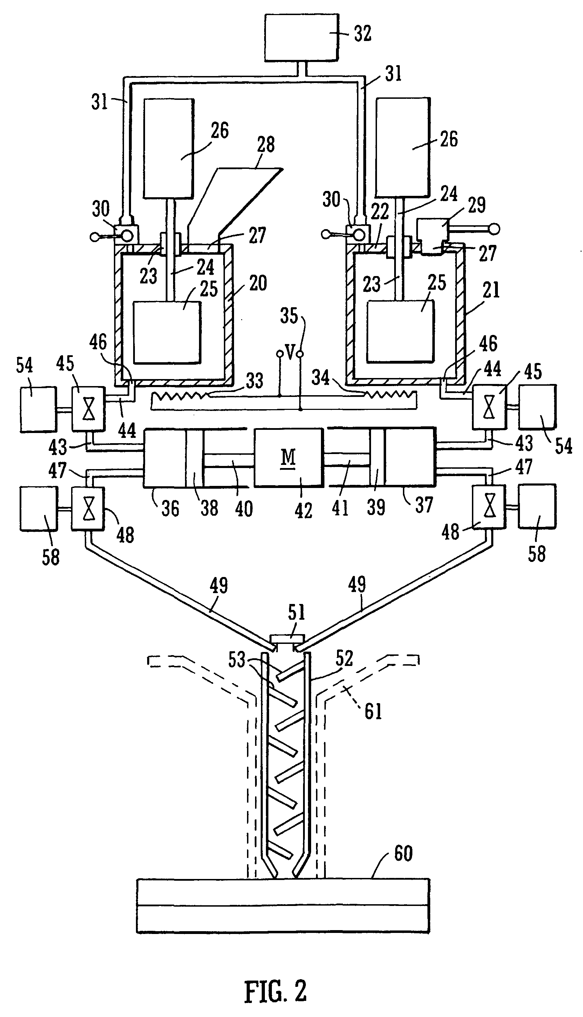

As shown in the diagrammatic view of Figure 2, the mechanism 10 comprises two closable reservoirs 20 and 21 each with a lid 22. A gas-tight bearing 23 is provided in the lid 22 of each reservoir to receive a shaft 24 carrying, inside the reservoir, a mixer paddle 25. Outside the respective reservoir, each shaft 24 is coupled to a respective electric motor 26. The lids of the reservoirs also have openings 27 into which there can be mounted respective funnels 28 (one is shown in the opening 27 of reservoir 21) or respective screwed plugs 29 (one is shown in the opening 27 of reservoir 22).

In use of the mechanism 10 the funnels 28 are fitted to enable the reservoirs to be filled with the required amounts of the chosen intermediates. The funnels 28 are then removed and replaced with the screwed plugs 29 to seal the reservoirs.

The reservoirs are connected via respective gas taps 30 mounted in the lids 22 and flexible tubing 31 to a supply 32 of inert gas such as nitrogen or argon for forming a gas blanket over the contents of the reservoirs when the mechanism is in use.

A heater, here illustrated as two electrical resistance heating elements 33 and 34, coupled to a source of electrical power 35 and located beneath respective ones of the reservoirs 20 and 21, is provided for heating the reservoirs with a view to melting the plastics material intermediates to be mixed.

The mechanism 10 also comprises two cylinders 36 and 37 containing respective pistons 38 and 39. The pistons 38 and 39 are connected via respective piston rods 40 and 41 to an electrically motorised drive mechanism 42.

The mechanism 42 could be replaced by two separate mechanisms one for each cylinder. In either case, the cylinders 36 and 37 could be alongside one another rather than coaxially opposed.

Each of the cylinders 36 and 37 is coupled via two conduits 43 and 44 and a valve 45 to a port 46 in the floor of the corresponding one of the two reservoirs 20 and 21. Each cylinder is also coupled via conduit 47 and a valve 48 to one of two conduits 49, one for each cylinder. The conduits 49 terminate near each other at an exit fitment 51.

Heater elements 33 and 34 are preferably arranged or additional elements are provided, so as to maintain and regulate the temperature, not only of the reservoirs, but also the valves 45 and 48, the conduits 43, 44, 47 and 49, and the cylinders 36 and 37 so as to ensure the molten plastics materials are kept at the right temperature.

In operation, the two reservoirs 20 and 21 are opened and, using the funnels 28, the appropriate intermediates are inserted. With the closure plugs 29 fitted and the gas blankets applied, the intermediates are then raised to the appropriate temperature, melting them if they are in the solid phase, and mixed by energising the mixer paddle drive motors 26. The mixed molten components are then drawn via valves 45 and conduits 43 and 44 into the cylinders 36 and 37 by appropriate movement of pistons 38 and 39 and subsequently expelled by the pistons 38 and 39 through valves 48 and conduits 47 and 49 out to the exit fitment 51.

The two valves 45 are coupled to respective drive units 54 while the two valves 48 are coupled to respective drive units 58. The drive units 54 and 58 are operated in conjunction with the drive 42 coupled to the pistons 38 and 39 to move the contents of the reservoirs 20 and 21 to the cylinders 36 and 37 and then to the conduits 49 as appropriate. As a safety feature, the valves may be operable so that, if the mixer tube is blocked say, the contents of the cylinders are transferred back to the reservoirs 20 and 21.

The conduits 49 extend at specific angles to the vertical (60° for example) and the exit ends to the conduits are at a specific distance one from another so that the contents of the reservoirs exit from the conduits 49 as respective streams which impinge together and become mixed. If required, a static mixing tube 52, i.e. a tube incorporating angled baffles 53, can be coupled to the fitment 51.

The tube 52 leads down to a mould 60 positioned in the compartment 3 below the mechanism 10. If the mixing tube is not used, a plain plastics tube (not shown) may be used to conduct the molten plastics material down to the mould 60 or the impinging streams exiting from the conduits 49 and 50 may be lead into a funnel 61 (illustrated in dashed lines to show that it is alternative to the tube 52) which leads down to the mould 60. This also enables the connection of widely differing mould sizes and geometries and gating points to the material outlet.

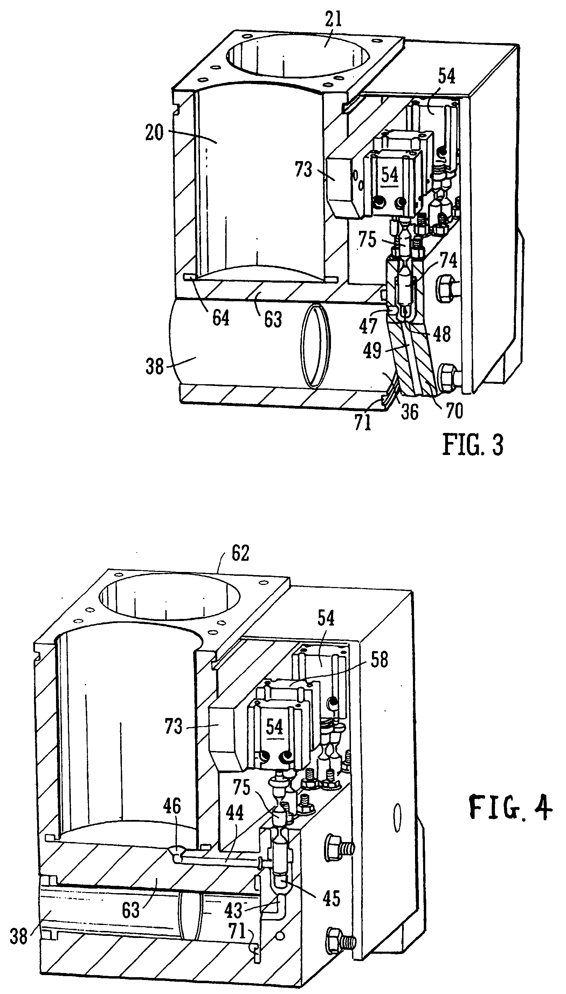

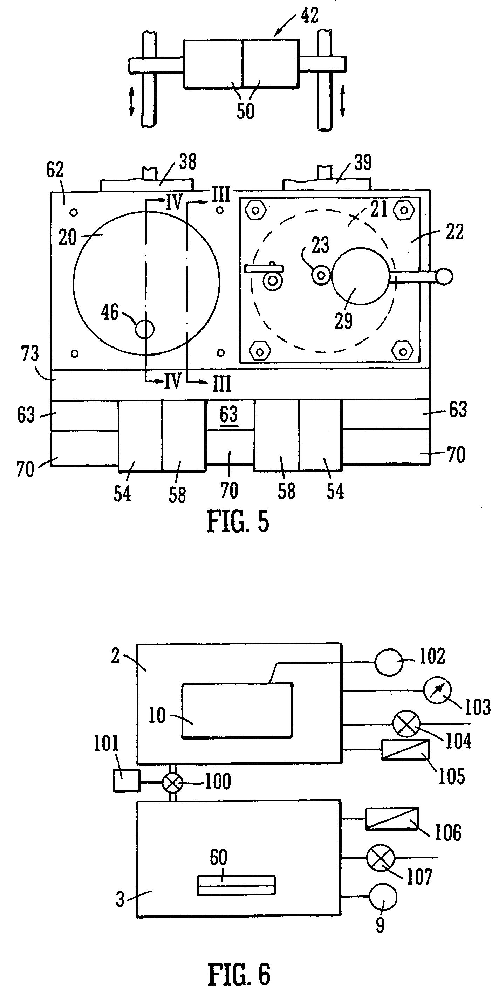

As shown in Figures 3, 4 and 5, the reservoirs 20 and 21 may be formed as through bores in a solid metal block 62, the block 62 being clamped by bolts (not shown) to the top of another solid metal block 63. The lids 22 and motors 26 are not shown in Figures 3 and 4. In Figure 5, a lid 22 is shown fitted over the top of reservoir 21 while reservoir 20 is shown open. The motors 26 and paddles 25 are also not shown in this figure. The bottoms of the through bores are closed by block 63 with respective gaskets 64 therebetween. Respective side-by-side horizontal bores are provided in block 63 to form the cylinders 36 and 37.

In Figures 3 and 4, the cylinder 37 is hidden behind cylinder 36 and underneath reservoir 21. It is generally the same as cylinder 36.

The pistons 38 and 39 may be elongate so as to extend back through the cylinders 36 and 37 to where they are coupled to the motor drive 42 (not shown in Figures 3 to 5). The motor drive 42 is operable to move the pistons by different distances dependent upon the quantities of the intermediates in the two reservoirs and to be mixed. This is done by providing a motor drive with respective motors 50 coupled via a suitable drive mechanism to the two pistons or by a single motor with a differential drive mechanism. In each case, the drive mechanism can comprise a ball-screw drive and the or each motor can comprise a stepper motor. The valves 45 and 48 are provided with the conduits 43, 44, 47 and 49 in a further block of metal 70 bolted to the end face of block 63 so as to cover the forward ends of the cylinders 36 and 37, a gasket 71 being provided between the block 70 and each cylinder. The drive units 54 and 58 are mounted above the valves 45 and 48, for example, by being fixed via a metal spacer 73 to block 62. The drive units 54 and 58 are coupled to respective cylindrical valve members 74 of the valves 45 and 48 by valve rods 75, preferably with a degree of flexibility in the rods to take up any misalignment of the valve members 74 in the valve seats 76. The heating elements 33 and 34 can be embodied as stainless steel heating cartridges (not shown) located in bores in the various blocks 62 and/or 63. The object of providing the reservoirs, cylinders, conduits and valves in relatively massive, bolted together blocks of metal is to achieve even temperature and less differential expansion of the parts of the mechanism.

Referring back to Figure 1, the mould 60 is located in compartment 3 supported on a hydraulic or manual or electric lifting platform 80. The mould 60 is a silicon rubber mould, for example the kind of mould which is made by embedding a prototype of an article to be moulded, or an existing item to be copied in liquid silicon mould making material in a mould box and allowing the material to set. The mould is then cut, for example, by hand using a sharp knife, to divide the mould in two parts so that the prototype or original item can be removed. The two parts of the mould are then placed together and secured, for example, by wrapping adhesive tape around them. A mould entry aperture and overflow apertures are also provided, either by post-forming or by providing suitable plugs in the mould box.

The mould 60 could be of polyurethane rubber or other suitable 'soft' material. Alternatively it could be a rigid mould, for example made of cast epoxy, sprayed or cast metal, or made by machining.

To carry out a moulding operation, the mould 60 is installed and the reservoirs 20 and 21 filled with fluid thermoplastics. For example, the aforementioned Caprolactum and activator can be placed in one reservoir while the catalyst is put in the other. Then with the reservoirs 20 and 21 and the doors 6 closed, the equipment is set-up using the control touch panel 8 to carry out the operation automatically. As noted, this involves heating the contents of reservoirs 20 and 21 whilst those contents are covered by a gaseous (e.g. nitrogen) blanket, mixing the plastics intermediates and dispensing them to the mould.

It may be desirable in some cases to maintain a vacuum within the compartment 2 but this is not always essential. However, for the described embodiment of the invention, a differential is maintained between the vacuum pressure of the compartments 2 and 3 at least while the molten plastics material is dispensed from the mechanism 10 to the mould 60. By way of preferred example, the chamber 2 could be maintained at a pressure of -0.9 Bar (i.e. 90% vacuum) while the compartment 3 is kept at a pressure of -1.0 Bar (100% vacuum). However, these values of differential vacuum can be changed depending upon choice having regard to factors such as the particular plastics material used and, and mould cavity geometries appertaining to filling.

Figure 6 shows a diagrammatic view of the chambers 2 and 3 of the casting equipment and indicating various controls connected thereto. The pressure equalising valve 100 and motor drive 101 is shown as are the mechanism 10 and mould 60 in the top and bottom chambers 2 and 3 respectively. Also, a pneumatic supply 102, i.e. an inlet supplying air at about 70 kPa (10 pounds per square inch) leads to the drives 54 and 58 (not shown in Figure 6) within the mechanism 10 for controlling the valves 45 and 48. The motor drive 101 could also be pneumatically driven and receive this supply 102 if desired. Item 103 is a simple analogue pressure gauge connected to the chamber 2 and useful during setting up of the equipment for checking the readings of pressure supplied by pressure transducer 105 to the electronic control and computing apparatus within chamber 5 (not shown in Figure 6). Valve 104 with a drive unit (not shown) controlled manually or by the control apparatus enables the vacuum build up in chamber 2 to be released.

A further pressure transducer 106 is coupled to chamber 3 to provide pressure readings to the control apparatus and this chamber is also coupled to the vacuum pump 9. The vacuum built up within the chamber 3 can be released via valve 107. Valve 107 can be relatively larger than the valve 104 to permit a relatively "fast leak" of the chamber 3 vacuum and a "slow leak" of the chamber 2 vacuum.

A vacuum line (not shown) to the chamber 2 can be provided if required, e.g. to facilitate operation with different levels of vacuum both below ambient as described earlier.

In operation, the plastics intermediates may be melted and mixed whilst both chambers are at ambient pressure and the molten mixture transferred to the mould whilst the upper chamber 2 is at ambient pressure and the lower chamber 3 is under a vacuum, say at circa 27 kPa (200 mm of mercury). When the mould is filled, e.g. evidenced by the plastics material having just started to emerge from appropriate apertures in the mould, filling ceases and the valve 100 opened to equalise the pressure in the chambers 2 and 3, say so that the pressure levels at circa 14 kPa (100 mm of mercury). Later the valves 104 and 107 are opened to admit ambient air to the chambers, i.e. to raise the pressure in the chambers to ambient and hence permit the doors of the chambers to be opened.

The apparatus shown can be used both in a differential pressure mode, i.e. with different levels of vacuum in the compartments 2 and 3 at the appropriate times, or in a non-differential vacuum casting mode with the pressure in the two compartments equalised equal to or below ambient throughout the casting operation.

## Claims

1. Apparatus for making a moulded thermoplastics material article, the apparatus comprising a plurality of reservoirs (20,21) for receiving respective polymer thermoplastics intermediate components, heating means (33, 34) for melting said components in said reservoirs and maintaining them heated, mixing means (26, 25) for mixing the molten contents of the respective reservoirs; piston and cylinder means for transferring the reservoir contents out of the reservoirs, support means for supporting a rigid or soft rubber (60) moulding, and dispensing means (51, 52) for dispensing said plastics material into a rigid or soft rubber mould (60) supported by said support means, **characterised in that** said apparatus comprises:
a first compartment (2) containing said reservoirs, said heating means, said mixing means and pump means;
a second compartment (3) sealed from said first compartment and containing said support means and said dispensing means; and
a vacuum pump and control means (7, 8, 9) for maintaining the ambient pressure in the second compartment less than the ambient pressure in the first-compartment;
said piston and cylinder means comprising, for each reservoir, a cylinder (37, 36) connected to the respective reservoir via a first valve (45) and to said dispensing means (52) via a second valve (48), and a piston (38, 39) connected to common drive means (42) for said pump means to supply respective controlled synchronised amounts of the contents of the reservoirs.

2. Apparatus according to claim 1, wherein the vacuum pump and control means are operable for maintaining the ambient pressure in each of the two compartments less than atmospheric pressure.

3. Apparatus according to claim 1 or 2, wherein said mould is a silicon or polyurethane rubber mould.

4. Apparatus according to any preceding claim, wherein said dispensing means comprises mixing means operable for mixing said plastics material before dispensing it to said mould.

5. Apparatus according to claim 4, wherein said dispensing means (52) comprises a static mixing tube (53).

6. Apparatus according to any preceding claim, wherein said reservoirs and said cylinders are formed in respective metal blocks (62, 63), said heating means (33, 34) being coupled to said blocks for heating the blocks.

## Patentansprüche

1. Vorrichtung zum Herstellen eines geformten Thermoplastmaterialgegenstands, die Vorrichtung umfassend mehrere Sammelbehälter (20, 21) zum Aufnehmen jeweiliger Polymerthermoplastzwischenkomponenten, Erhitzungsmittel (33, 34) zum Schmelzen der Komponenten in den Sammelbehältern und Beibehalten ihrer Erhitzung, Mischmittel (26, 25) zum Mischen der geschmolzenen Inhalte der jeweiligen Sammelbehälter; Kolben- und Zylindermittel zum Überführen der Sammelbehälterinhalte aus den Sammelbehältern, Stützmittel zum Stützen einer starren oder weichen Gummiform (60) und Ausgabemittel (51, 52) zum Ausgeben des Kunststoffmaterials in eine starre oder weiche Gummiform (60), die durch das Stützmittel gestützt ist, **dadurch gekennzeichnet, daß** die Vorrichtung
eine erste Abteilung (2), die die Sammelbehälter, die Erhitzungsmittel, die Mischmittel und Pumpmittel enthält;
eine zweite Abteilung (3), die von der ersten Abteilung abgedichtet ist und Stützmittel und Ausgabemittel enthält; und
ein Vakuumpumpen- und Steuermittel (7, 8, 9) zum geringer Halten des Umgebungsdrucks in der zweiten Abteilung als den Umgebungsdruck in der ersten Abteilung umfaßt;
wobei die Kolben- und Zylindermittel für jeden Sammelbehälter einen Zylinder (37, 36), der mit dem jeweiligen Sammelbehälter über ein erstes Ventil (45) und mit dem Ausgabemittel (52) über ein zweites Ventil (48) verbunden ist, und einen Kolben (38, 39), der mit üblichen Antriebsmitteln (42) für die Pumpmittel zum Zuführen jeweils gesteuerter, synchronisierter Mengen der Inhalte der Sammelbecken verbunden ist, umfassen.

2. Vorrichtung nach Anspruch 1, wobei die Vakuumpumpen- und Steuermittel zum geringer Halten des Umgebungsdrucks in jeder der zwei Abteilungen als den atmosphärischen Druck betriebsbereit sind.

3. Vorrichtung nach einem der Ansprüche 1 oder 2, wobei die Form eine Silikon- oder Polyurethangummiform ist.

4. Vorrichtung nach einem der vorhergehenden Ansprüche, wobei das Ausgabemittel Mischmittel umfaßt, die zum Mischen des Kunststoffmaterials vor seiner Ausgabe in die Form betriebsbereit sind.

5. Vorrichtung nach Anspruch 4, wobei das Ausgabemittel (52) ein statisches Mischrohr (53) umfaßt.

6. Vorrichtung nach einem der vorhergehenden Ansprüche, wobei die Sammelbehälter und die Zylinder in jeweiligen Metallblöcken (62, 63) ausgebildet sind, wobei die Erhitzungsmittel (33, 34) zum Erhitzen der Blöcke an die Blöcke gekuppelt sind.

## Revendications

1. Appareil pour réaliser un article thermoplastique moulé, l'appareil comprenant une pluralité de réservoirs (20, 21) pour recevoir des composants intermédiaires thermoplastiques polymères respectifs, des moyens chauffants (33, 34) pour fondre lesdits composants dans lesdits réservoirs et les maintenir chauffés, des moyens de mélange (26, 25) pour mélanger le contenu fondu des réservoirs respectifs ; des moyens de piston et cylindre pour transférer le contenu de réservoir des réservoirs, des moyens de support pour supporter un moulage rigide ou en caoutchouc mou (80), et des moyens de distribution (51, 52) pour distribuer ledit plastique dans un moule rigide ou en caoutchouc mou (60) supporté par lesdits moyens de support, **caractérisé en ce que** ledit appareil comprend :
un premier compartiment (2) contenant lesdits réservoirs, lesdits moyens chauffants, lesdits moyens de mélange et des moyens de pompe ;
un second compartiment (3) isolé hermétiquement par rapport audit premier compartiment et contenant lesdits moyens de support et lesdits moyens de distribution ; et
une pompe à vide et des moyens de commande (7, 8, 9) pour maintenir la pression ambiante dans le second compartiment inférieure à la pression ambiante dans le premier compartiment,
lesdits moyens de piston et cylindre comprenant, pour chaque réservoir, un cylindre (37, 36) relié au réservoir respectif par l'intermédiaire d'une première soupape (45) et auxdits moyens de distribution (52) par l'intermédiaire d'une seconde soupape (48), et un piston (36, 39) relié à des moyens d'entraînement communs (42) pour lesdits moyens de pompe pour fournir des quantités synchronisées commandées respectives du contenu des réservoirs.

2. Appareil selon la revendication 1, dans lequel la pompe à vide et les moyens de commande sont opérationnels pour maintenir la pression ambiante dans chacun des deux compartiments inférieure à la pression atmosphérique.

3. Appareil selon la revendication 1 ou 2, dans lequel ledit moule est un moule en caoutchouc de silicone ou polyuréthane.

4. Appareil selon l'une quelconque des revendications précédentes, dans lequel lesdits moyens de distribution comprennent des moyens de mélange opérationnels pour mélanger ledit plastique avant de le distribuer audit moule.

5. Appareil selon la revendication 4, dans lequel lesdits moyens de distribution (52) comprennent un tube de mélange statique (53).

6. Appareil selon l'une quelconque des revendications précédentes, dans lequel lesdits réservoirs et lesdits cylindres sont formés dans des blocs métalliques respectifs (62, 63), lesdits moyens chauffants (33, 34) étant couplés auxdits blocs pour chauffer les blocs.
